# EUROPEAN PATENT SPECIFICATION

(11) **EP 4 143 403 B1**
(45) Date of publication and mention of the grant of the patent: **15.10.2025**
(21) Application number: 21721144.0
(22) Date of filing: 20.04.2021
(51) Int. Cl.: E04H 12/08, F03D 13/20, E04H 12/22

(54) **METHOD AND ARRANGEMENT FOR CONNECTING A FIRST RING ELEMENT AND A SECOND RING ELEMENT IN A TOWER CONSTRUCTION**
VERFAHREN UND ANORDNUNG ZUM VERBINDEN EINES ERSTEN RINGELEMENTS UND EINES ZWEITEN RINGELEMENTS IN EINEM TURMBAUWERK
PROCÉDÉ ET AGENCEMENT SERVANT À RELIER UN PREMIER ÉLÉMENT ANNULAIRE ET UN SECOND ÉLÉMENT ANNULAIRE DANS UNE CONSTRUCTION DE TOUR

(30) Priority: 28.04.2020 FI 20205430
(43) Date of publication of application: 08.03.2023
(73) Proprietor: Peikko Group Oy, 15170 Lahti (FI)
(72) Inventor: BERZINS, Andris, 1005 Riga (LV); SLISERIS, Janis, 1005 Riga (LV); LAPSINS, Juris, 1005 Riga (LV)
(74) Representative: Boco IP Oy Ab
(86) International application number: PCT/FI2021/050291
(87) International publication number: WO 2021/219928

(56) References cited:
- WO-A1-2013/097865
- CH-A5- 675 742
- DE-A1- 2 708 664
- US-A1- 2010 101 173

## Description

### Field of the invention

The invention relates to a method for connecting a first ring element of a first tower element and a second ring element of a second tower element in a tower construction as defined in the preamble of independent claim 1.

The invention also relates to an arrangement comprising a first ring element of a first tower element and a second ring element of a second tower element in a tower construction as defined in the preamble of independent claim 10.

The invention relates especially to methods and to arrangements for attaching a tower-like structure to a foundation having a ring element serving as an adapter between the foundation and the tower-like construction. The presented method and arrangement can however also be utilized when connecting together other tower elements, such as tubular tower sections, of a tower construction.

First tower element can in this context for example be a part of a foundation of the tower construction and second tower element can in this context be a tubular tower of the tower construction or be a lowermost tubular section element of a tubular tower of the tower construction, if the tower construction having a tubular tower comprising several tubular section elements. Alternatively, first tower element can in this context for example be a tubular tower of the tower construction or be a lowermost tubular section element of a tubular tower of the tower construction, if the tower construction having a tubular tower comprising several tubular section elements and second tower element can in this context be a part of a foundation of the tower construction.

First tower element can in this context example be a first tubular section element of a tubular tower of the tower construction and second tower element can in this context be a second tubular section element of the tubular tower of the tower construction, if the tower construction having a tubular tower comprising several tubular section elements.

First tower element can in this context for example be the nacelle of a tower construction that is in the form of a wind turbine and second tower element can in this context be a tubular tower of the tower construction or be an uppermost tubular section element of a tubular tower of the tower construction, if the tower construction that is in the form of a wind turbine has a tubular tower comprising several tubular section elements. Alternatively, first tower element can in this context be a tubular tower of a tower construction that is in the form of a wind turbine or be an uppermost tubular section element of a tubular tower of a tower construction that is in the form of a wind turbine, if the tower construction that is in the form of a wind turbine has a tubular tower comprising several tubular section elements and second tower element can in this context for example be the nacelle of a tower construction that is in the form of a wind turbine.

Document EP 2 616 594 presents a method and an arrangement for attaching a tower-like structure to a foundation having a ring element serving as an adapter between the foundation and the tower-like construction. The ring element is configured to be anchored by means of anchoring bolts to concrete of the foundation and configured to receive a flange of the lowest part of the tower construction. The ring element is configured to be connected to the flange of the lowest part of the tower construction by means of fastening bolts. The ring element is configured to be located partly inside the concrete of the foundation so that the lower surface is in contact with the concrete of the foundation and so that the upper surface is at least partly outside the concrete of the foundation. The ring element comprises first through holes configured to receive fastening bolts and provided in a first circular pattern. The first through holes provided in the first circular pattern extend from the upper surface to the lower surface through the entire ring element in a thickness direction of the ring element. One problem with the this known method and arrangement is that is creates stress hotspots and fatigue around the first through holes.

Document WO 2011/116817 presents a method for laying a foundation and WO 2013/097865 A1 discloses a method according to the preamble of claim 1 and an arrangement according to the preamble of claim 10.

### Objective of the invention

The object is to provide a method and an arrangement for connecting a first ring element of a first tower element and a second ring element of a second tower element in a tower construction that reduces stress hotspots and fatigue around the first through holes and thereby increases fatigue resistance.

### Short description of the invention

The method for connecting a first ring element of a first tower element and a second ring element of a second tower element in a tower construction of the invention is characterized by the definitions of independent claim 1.

Preferred embodiments of the method are defined in the dependent claims 2 to 9.

The arrangement comprising a first ring element of a first tower element and a second ring element of a second tower element in a tower construction of the invention is correspondingly characterized by the definitions of independent claim 10.

Preferred embodiments of the arrangement are defined in the dependent claims 1 to 17.

### List of figures

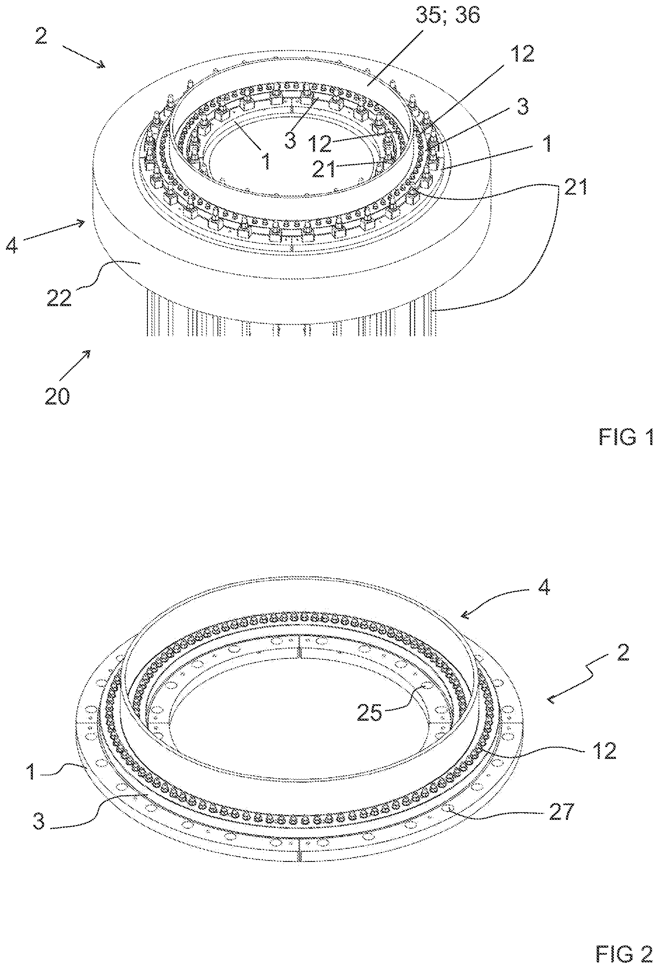

In the following the invention will described in more detail by referring to the figures, which shows
Figure 1 shows a first embodiment of a method and of an arrangement for connecting a first ring element of first tower element and a second ring element of a second tower element in a tower construction, where the first ring element of first tower element is in the form of an adapter ring of a foundation of the tower construction and where the second ring element is in the form of a flange attached to a lower end of a second tower element that is in the form of a tubular tower of the tower construction or that is in the form of a tubular section element of a tubular tower of the tower construction,
Figure 2 shows some parts of the first embodiment illustrated in figure 1 as detached from the foundation,
Figure 3 shows the parts illustrated in figure 2 in exploded view,
Figure 4 shows a first variant a ring element that can be used in the first embodiment of method and of the arrangement,
Figure 5 shows a detail of the ring element shown in figure 4,
Figure 6 shows a second variant a ring element that can be used in the first embodiment of the method and of the arrangement,
Figure 7 shows a detail of the ring element shown in figure 6,
Figure 8 shows a third variant a ring element that can be used in the first embodiment of the method and of the arrangement,
Figure 9 shows a detail of the ring element shown in figure 8,
Figure 10 shows a fourth variant a ring element that can be used in the first embodiment of the method and of the arrangement,
Figure 11 shows a detail of the ring element shown in figure 10,
Figure 12 shows a fifth variant a ring element that can be used in the first embodiment of the method and of the arrangement,
Figure 13 shows a detail of the ring element shown in figure 12,
Figure 14 shows a first variant of an arc section of a ring element that can be used in the method and in the arrangement,
Figure 15 shows a second variant of an arc section of a ring element that can be used in the method and in the arrangement,
Figure 16 shows a second embodiment of the method and of the arrangement for connecting a first ring element of first tower element and a second ring element of a second tower element in a tower construction, where the first tower element is in the form of a tubular section element of a tubular tower of the tower construction and where the second tower element is in the form of a tubular section element of a tubular tower of the tower construction,
Figure 17 is a detail view of the second embodiment of the method and of the arrangement illustrated in figure 16,
Figure 18 shows the first ring element and a part of the first tower element used in the second embodiment of the method and of arrangement illustrated in figure 16,
Figure 19 is a detail view of figure 18,
Figure 20 is a detail view of a third embodiment of the method and of the arrangement for connecting a first ring element of first tower element and a second ring element in a second tower element,
Figure 21 shows the first ring element and a part of the first tower element used in the third embodiment of the method and of arrangement illustrated in figure 20,

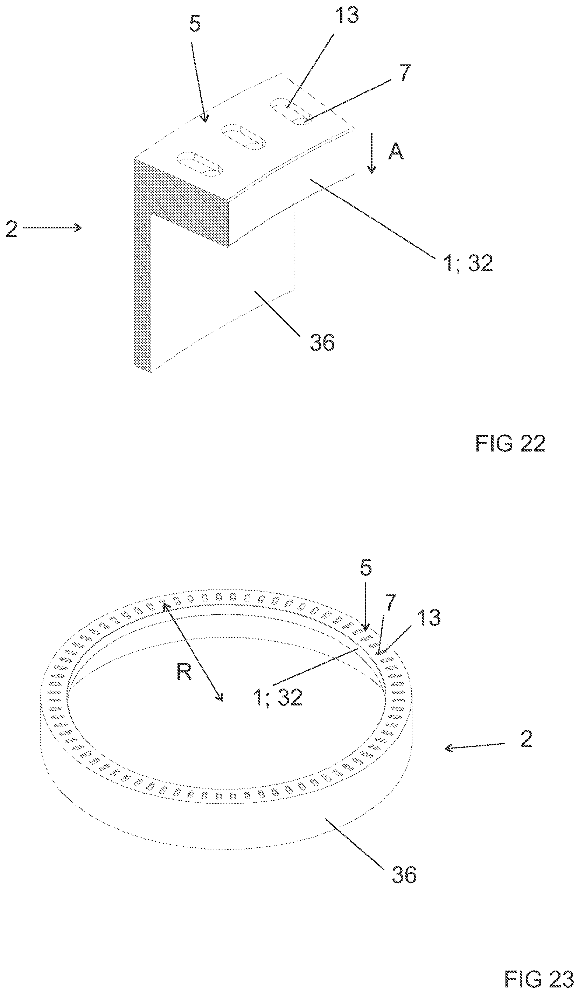

Figure 22 is a detail view of figure 21,
Figure 23 shows a first ring element and a part of a first tower element used in a fourth embodiment of the method and of the arrangement for connecting a first ring element of first tower element and a second ring element of a second tower element,
Figure 24 is a detail view of figure 23,
Figure 25 shows a fifth embodiment of the method and of the arrangement for connecting a first ring element of first tower element and a second ring element of a second tower element in a tower construction, where the first tower element is in the form of a tubular section element of a tubular tower of the tower construction and where the second tower element is in the form of a tubular section element of a tubular tower of the tower construction,
Figure 26 is a detail view showing some parts of the fifth embodiment illustrated in figure 25,
Figure 27 shows the first ring element and a part of the first tower element of the fifth embodiment of the method and of arrangement illustrated in figure 26,
Figure 28 is a detail view of figure 27,
Figure 29 shows an alternative to the first ring element and to the part of the first tower element of the fifth embodiment of the method and of arrangement illustrated in figure 27,
Figure 30 is a detail view of figure 29,
Figure 31 shows a sixth embodiment of the method and of the arrangement for connecting a first ring element of first tower element t a second ring element of a second tower element of the tower construction, where the first tower element is in the form of a tubular section element of a tubular tower of the tower construction and where the second tower element is in the form of a tubular section element of a tubular tower of the tower construction,
Figure 32 is a detail view showing some parts of the fifth embodiment illustrated in figure 31,
Figure 33 shows a detail of a part of the first tower element and the first ring element of the fifth embodiment of the method and of arrangement illustrated in figure 33,
Figure 34 shows an alternative to the part of the first tower element and the first ring element of the sixth embodiment of the method and of arrangement illustrated in figure 31,
Figure 35 is a detail view of figure 34,
Figure 36 shows an alternative to the part of the first tower element and the first ring element of the sixth embodiment of the method and of arrangement illustrated in figure 31,
Figure 37 is a detail view of figure 36,
Figure 38 shows a first embodiment of a tower construction that is in the form of a wind turbine, and
Figure 39 shows a second embodiment of a tower construction that is in the form of a wind turbine.

### Detailed description of the invention

First the method for connecting a first ring element 1 of a first tower element 2 and a second ring element 3 of a second tower element 4 in a tower construction (not marked with a reference numeral) such as a wind turbine and some variants and embodiments of the method will be described in greater detail. The first ring element 1 and the second ring element 3 are preferably, but not necessarily, made of metal.

First tower element 2 can in this context for example be an adapter ring (not marked with a reference numeral) of a foundation 20 of the tower construction and second tower element 4 can in this context be a tubular tower 35 of the tower construction, as illustrated in figures 1 to 3 and 38, or be a lowermost tubular section element 36 of a tubular tower 35 of the tower construction, if the tower construction has a tubular tower 35 comprising several tubular section elements 36 as illustrated in figures 1 to 3 and 39.

Alternatively, first tower element 2 can in this context for example be a tubular tower 35 of the tower construction or be a lowermost tubular section element 36 of a tubular tower 35 of the tower construction, if the tower construction has a tubular tower 35 comprising several tubular section elements 36 and second tower element 4 can in this context be a part of a foundation of the tower construction.

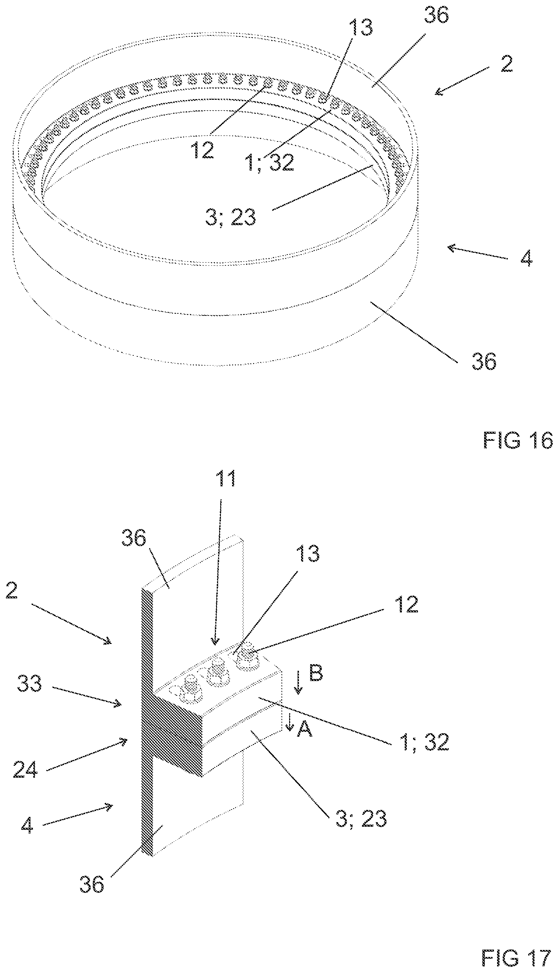

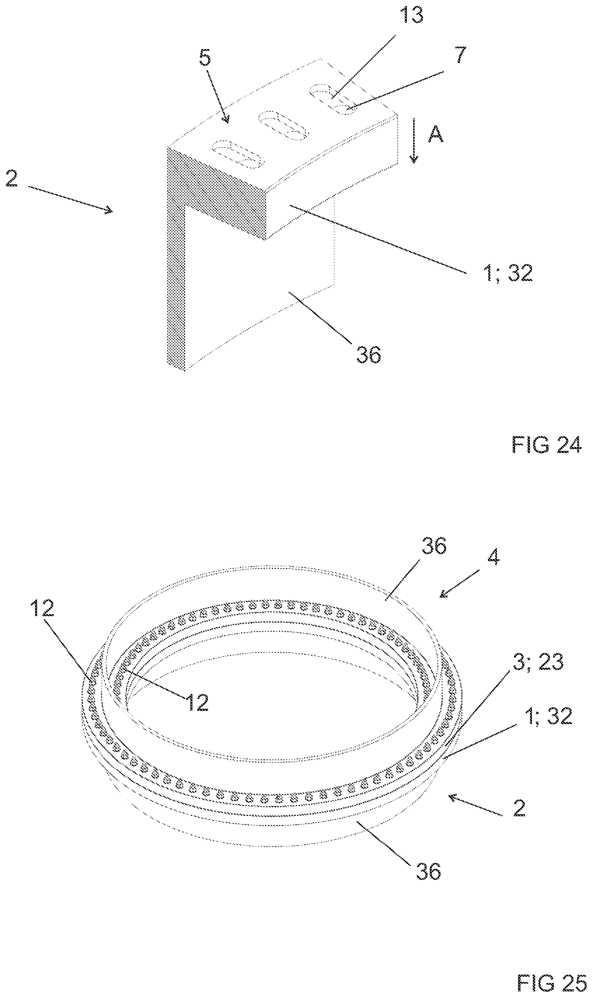

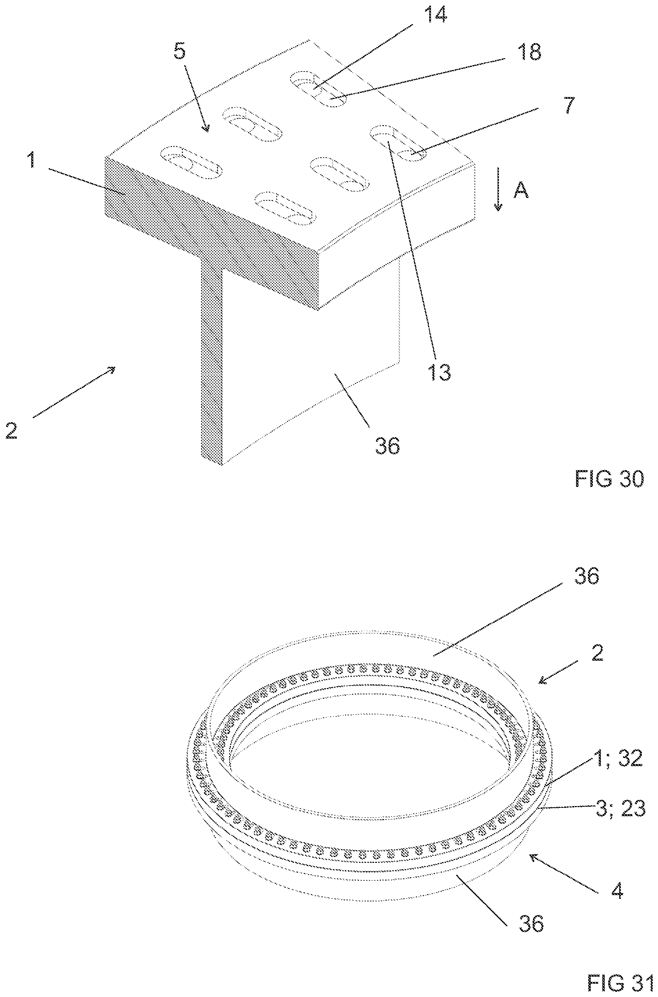

First tower element 2 can in this context example be a tubular section element 36 of a tubular tower 35 of the tower construction and second tower element 4 can in this context be an adjacent tubular section element 36 of the tubular tower 35 of the tower construction, if the tower construction has a tubular tower 35 comprising several tubular section elements 36. Such embodiments are for example illustrated in figures 16, 25, 31, and 39.

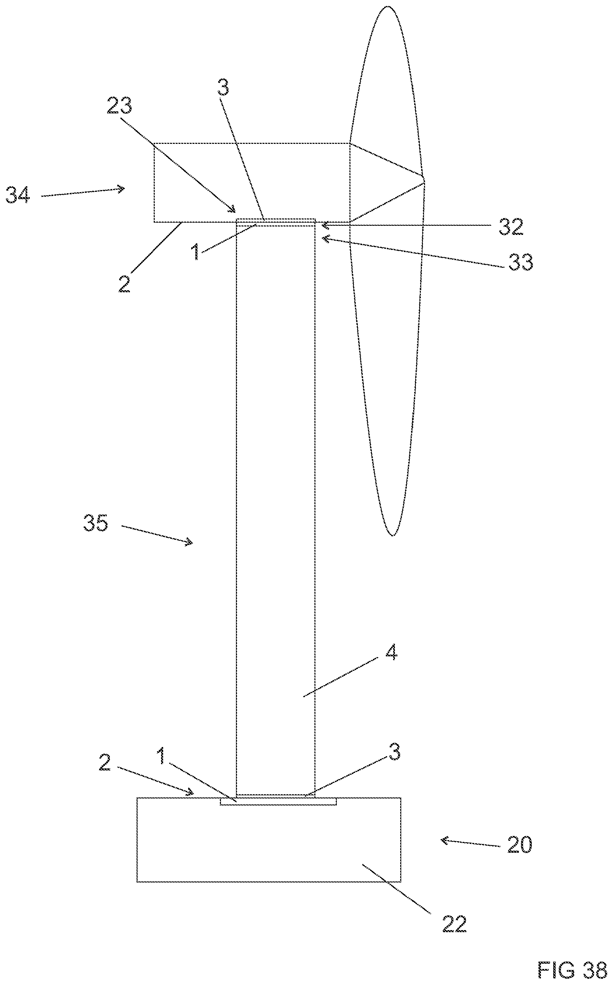

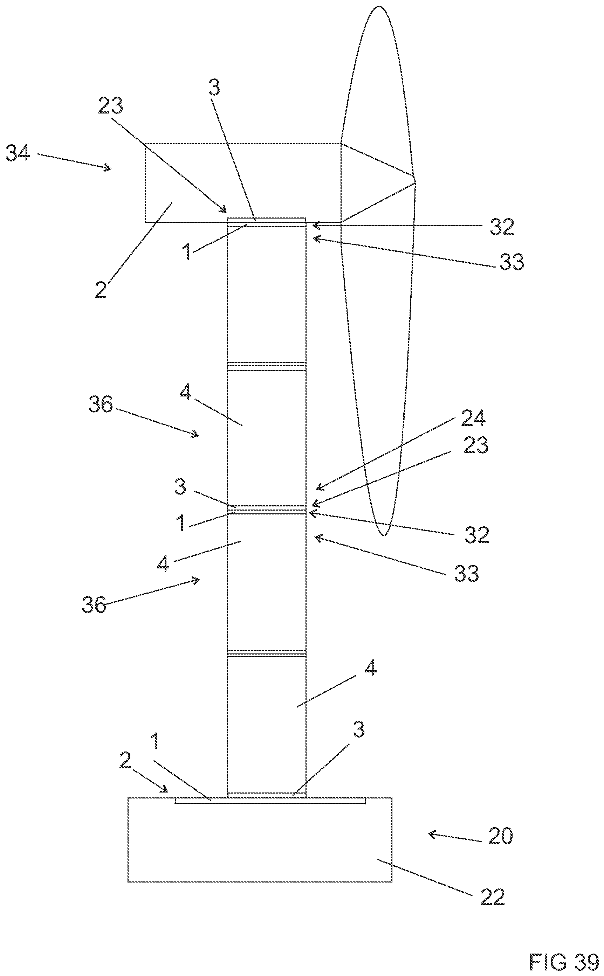

First tower element 2 can in this context for example be the nacelle 34 of a tower construction that is in the form of a wind turbine and second tower element 4 can in this context be a tubular tower 35 of the tower construction, as illustrated in figure 38, or be an uppermost tubular section element 36 of a tubular tower 35 of the tower construction, if the tower construction that is in the form of a wind turbine has a tubular tower 35 comprising several tubular section elements 36 as illustrated in figure 39.

Alternatively, first tower element 2 can in this context be a tubular tower 35 of a tower construction that is in the form of a wind turbine or be an uppermost tubular section element 36 of a tubular tower 35 of a tower construction that is in the form of a wind turbine, if the tower construction that is in the form of a wind turbine has a tubular tower 35 comprising several tubular section elements 36 and second tower element 4 can in this context for example be the nacelle 34 of a tower construction that is in the form of a wind turbine.

The method comprises an arranging step for arranging a first abutment ring surface 5 of the first ring element 1 of the first tower element 2 against a second abutment ring surface 6 of the second ring element 3 of the second tower element 4.

The method comprises an aligning step for aligning first through holes 7 passing through the first ring element 1 in a thickness direction A of the first ring element 1 and provided in a first circular pattern 8 in the first ring element 1 with second through holes 9 passing through the second ring element 3 in a thickness direction B of the second ring element 3 and provided in a second circular pattern 10 in the second ring element 3 to provide first aligned through holes 11.

The method comprises a fastening step for fastening the first ring element 1 to the second ring element 3 by arranging fastening bolts 12 in the first aligned through holes 11.

Fastening bolts 12 means in this context for example headed bolts or double ended threaded studs. Nuts (not marked with a reference numeral) are preferably, but not necessarily, threaded onto the fastening bolts 12 as illustrated in the figures.

In the method the first ring element 1 is preferably, but not necessarily, fastened to the second ring element 3 by fastening bolts 12 arranged in the first aligned through holes 11 so that the fastening bolts 13 presses the first ring element 1 against the second ring element 3.

The method comprises a providing step for providing at least some of the first through holes 7 of the first ring element 1 with a first slot 13 extending from the first through hole 7 in the thickness direction A of the first ring element 1 from the first abutment ring surface 5 of the first ring element 1 in a radial direction R of the first ring element 1.

The first slots 13 will locally reduce the stiffness and alter the stress flow resistance around the first through holes 7. This will reduce the peak stress and increase fatigue stress.

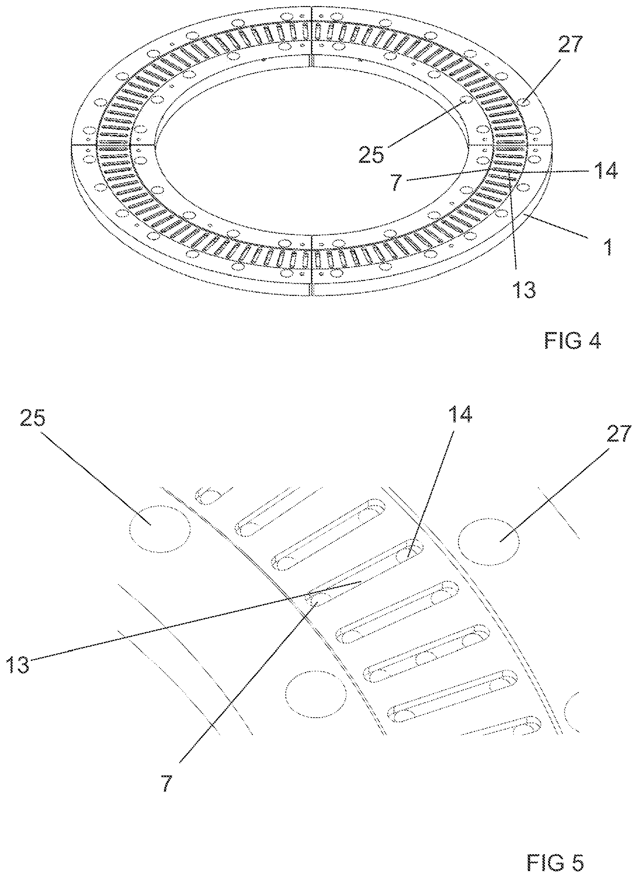

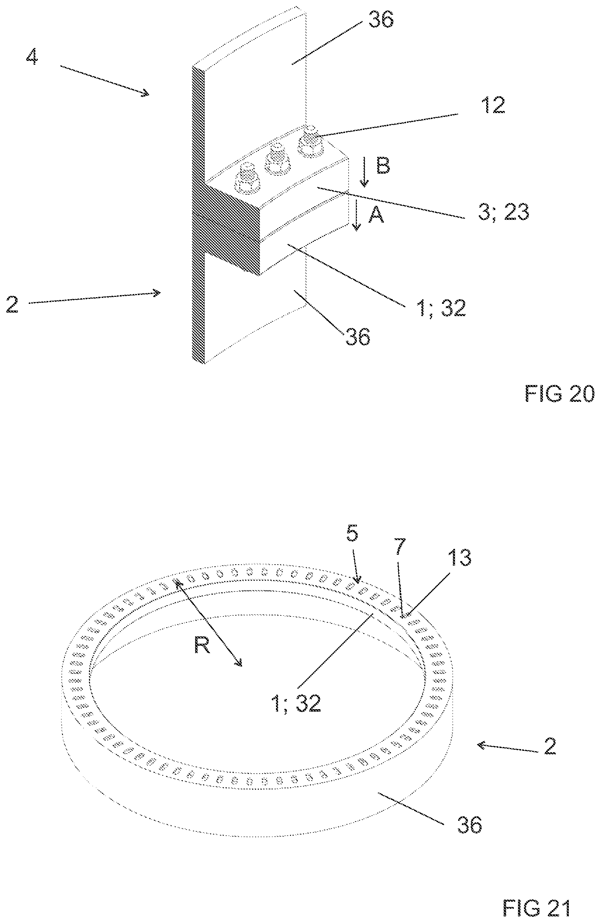

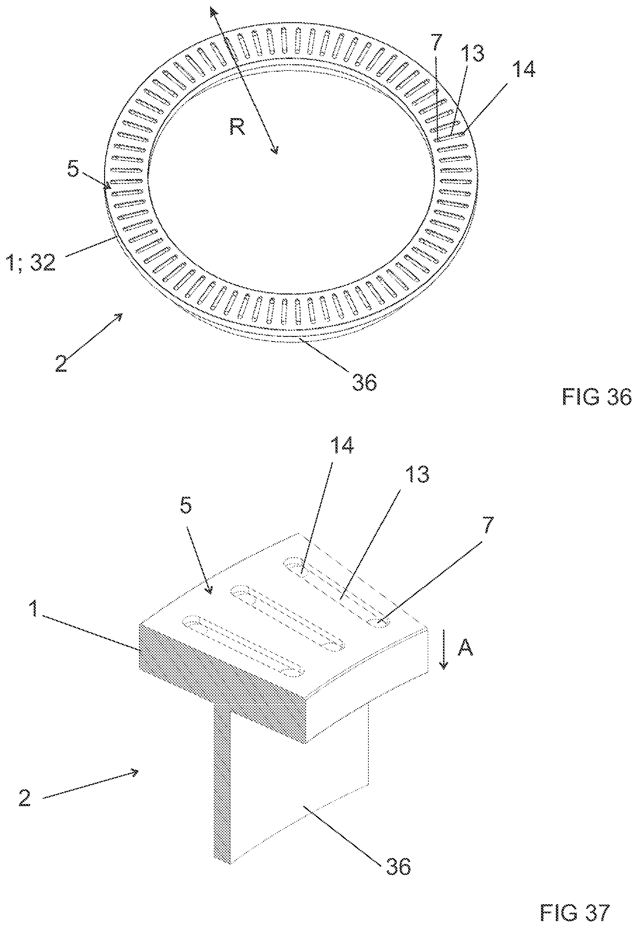

At least some of the first slots 13 in the providing step can be provided to extend in two directions from the first through hole 7 as illustrated in figures 4, 5, 12, 13, 15, 21, 30, and 37.

At least some of the first slots 13 can be provided to have a uniform depth throughout the first slot 13 or at a part of the first slot 13.

At least some of the first slots 13 can be provided to have a varying depth throughout the first slot 13 or at a part of the first slot 13.

At least some of the first slots 13 can be provided to have a uniform width throughout the first slot 13 or at a part of the first slot 13.

At least some of the first slots 13 can be provided to have a varying width throughout the first slot 13 or at a part of the first slot 13.

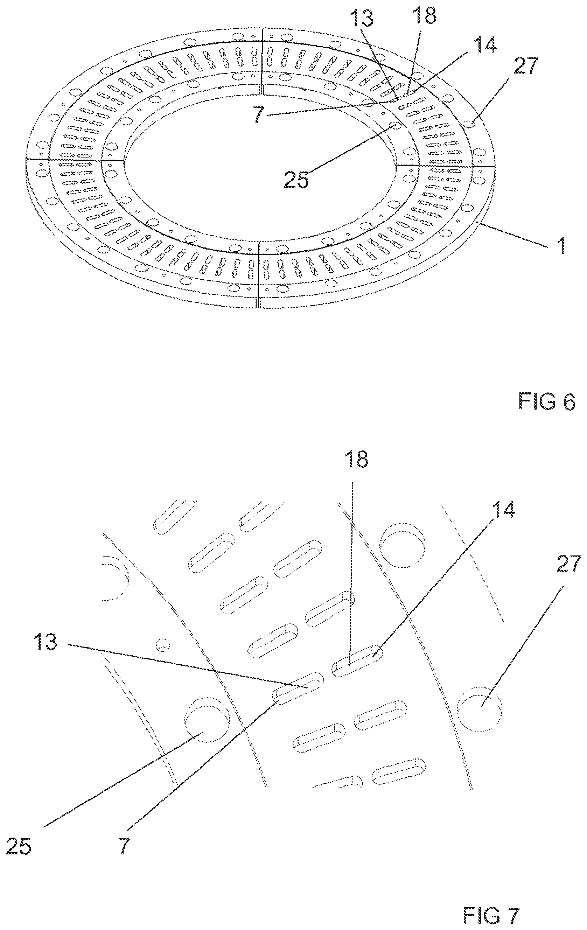

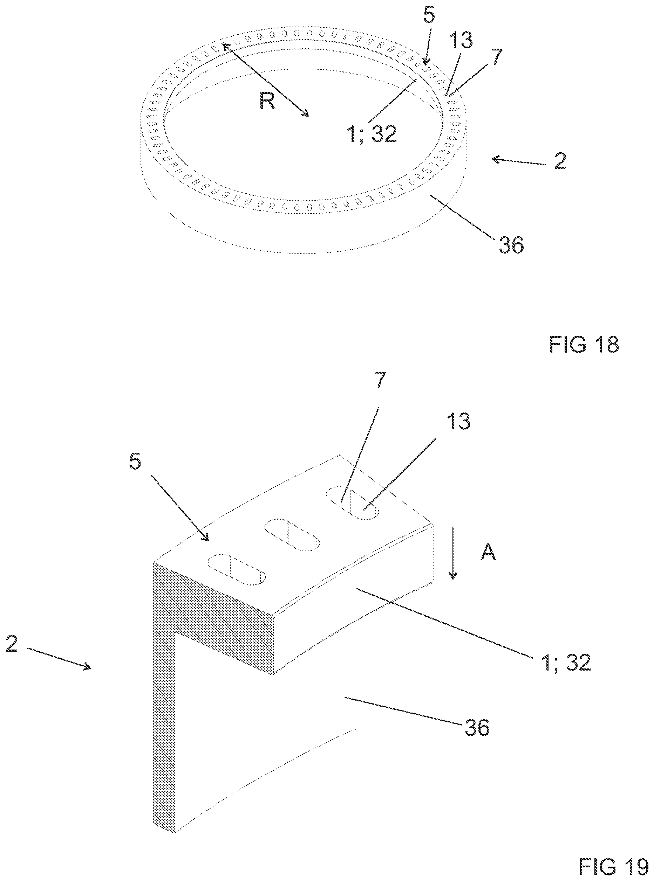

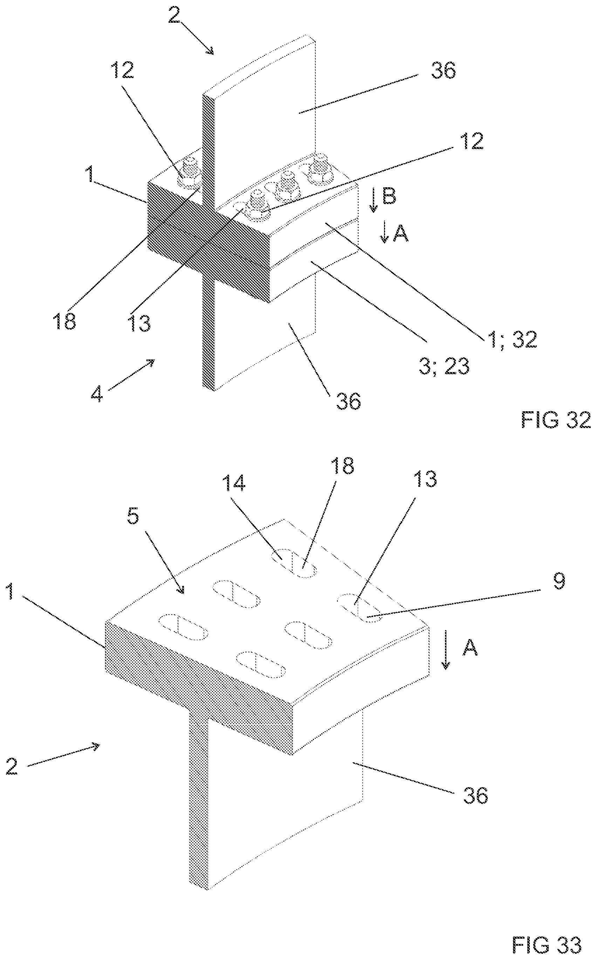

At least some of the first slots 13 in the providing step can be provided as through slots extending through the entire first ring element 1 in the thickness direction A of the first ring element 1 as illustrated for example in figures 6 and 7, figures 18 and 19, and in figures 32 and 33.

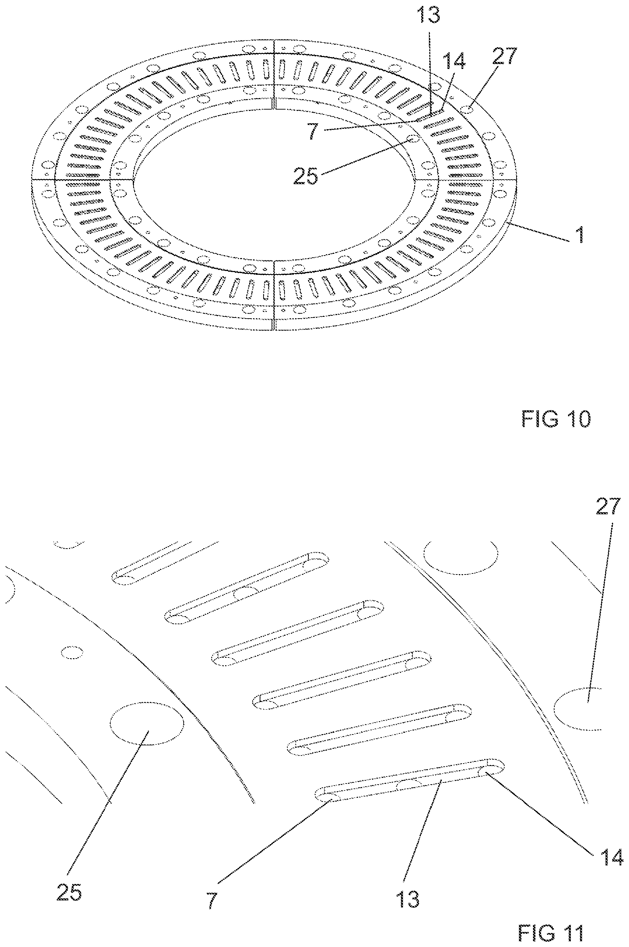

At least some of the first slots 13 in the providing step can be provided as blind slots recessed into the first ring element 1 in the thickness direction A of the first ring element 1 as illustrated for example in figures 4, 5, and 8 to 13. Blind slot means that the slot is provided with a bottom and that the slot is not a through slot as is the case with blind holes.

At least some of the first slots 13 in the providing step can be provided with at least one first through slot section (not shown in the figures) extending through the entire first ring element 1 in the thickness direction A of the first ring element 1 and with at least one first blind slot section (not shown in the figures) recessed into the first ring element 1 in the thickness direction A of the first ring element 1.

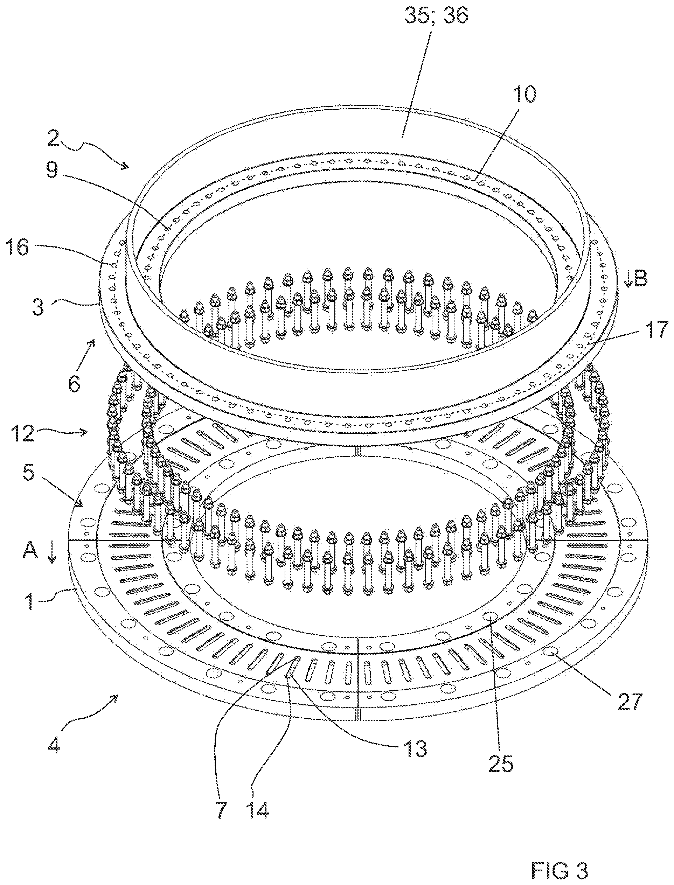

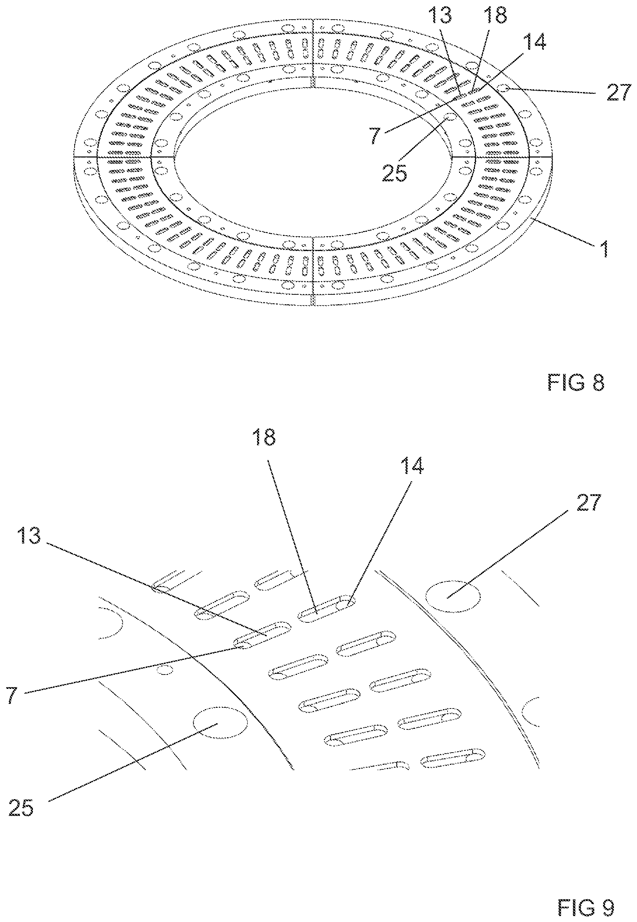

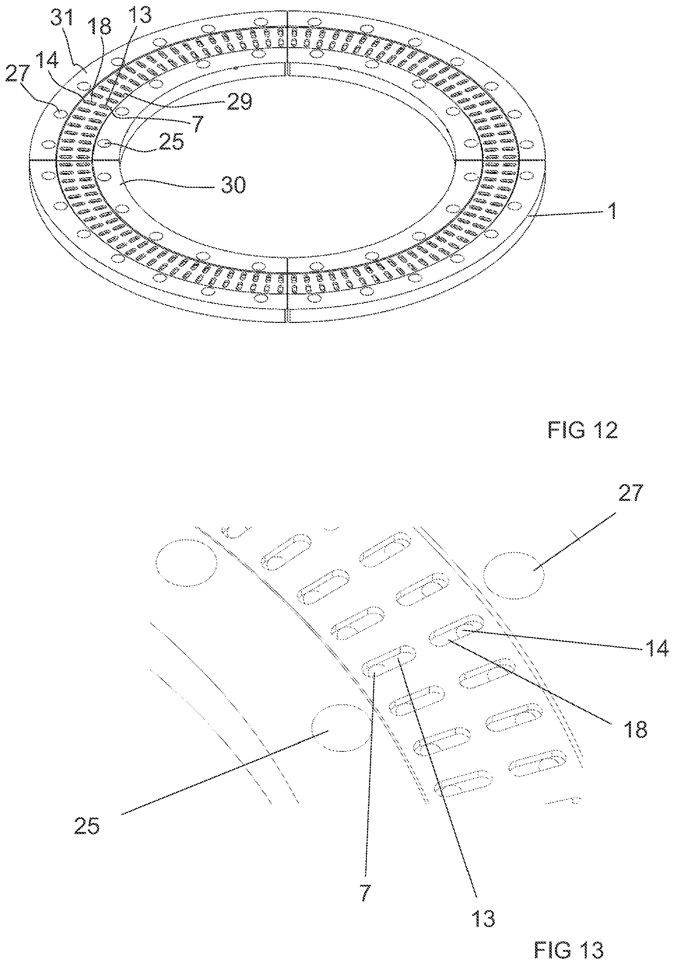

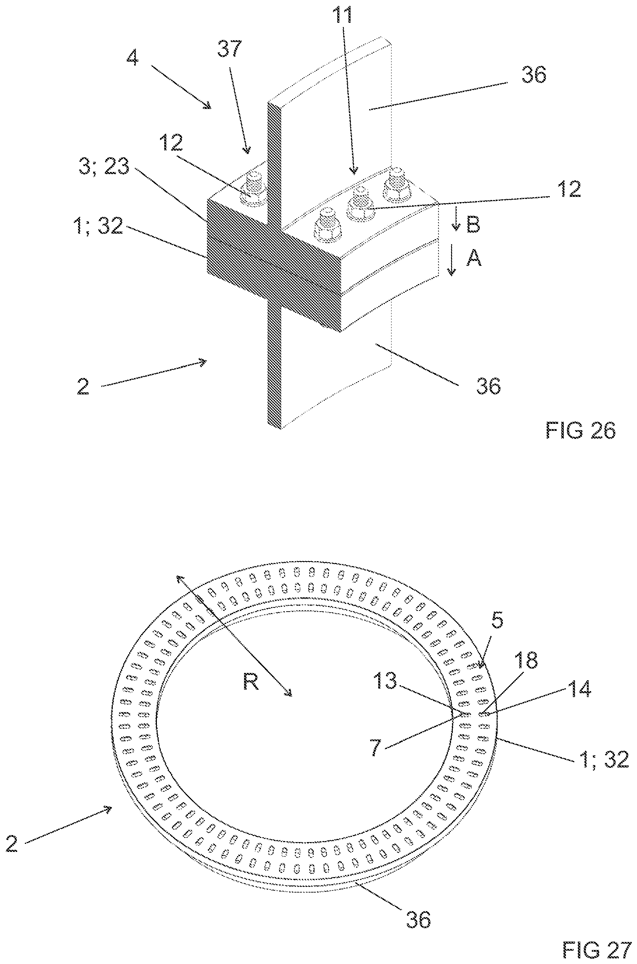

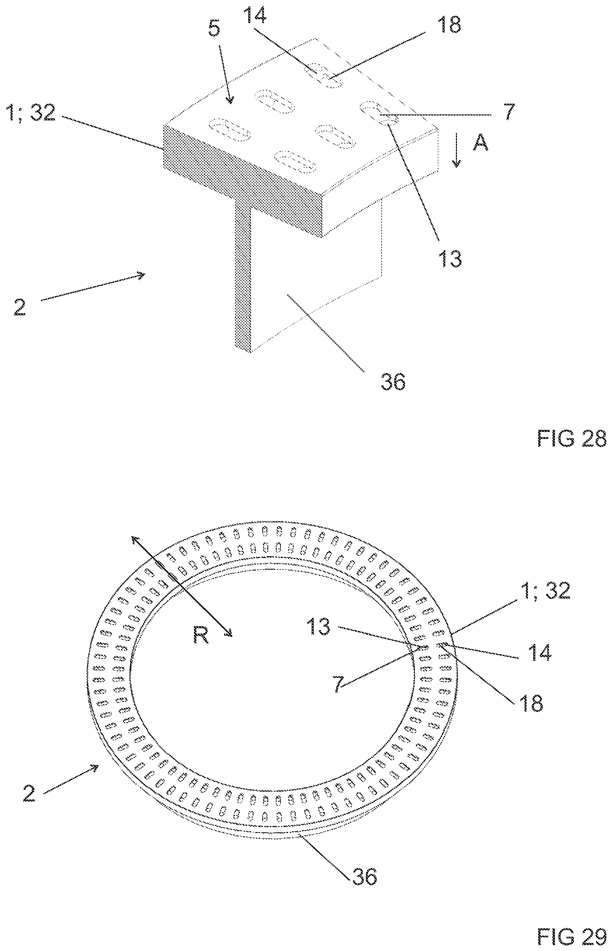

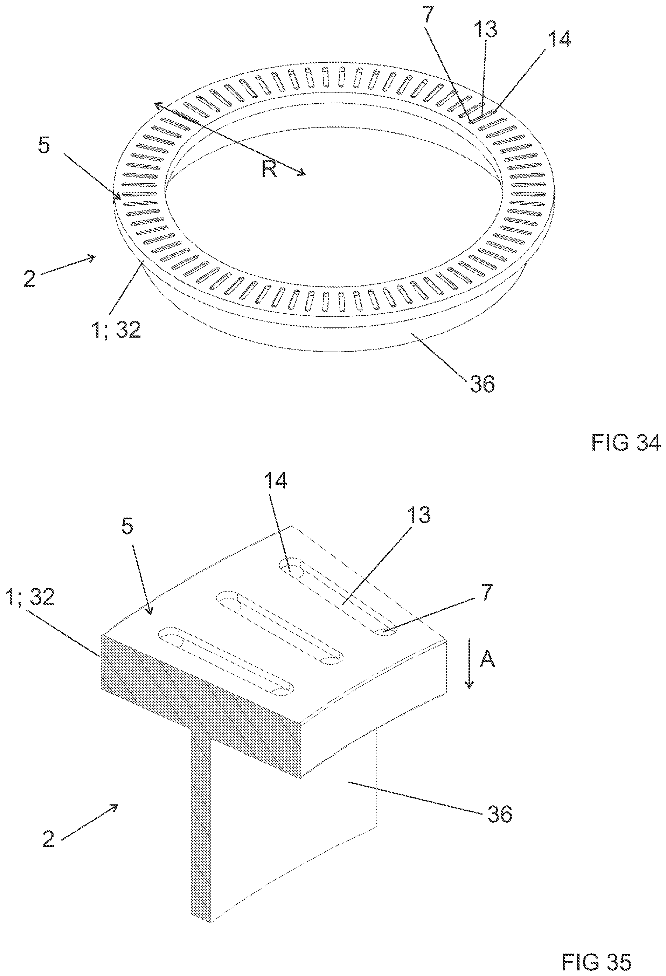

The aligning step comprises in some embodiment such as in the embodiment illustrated in figures 1, 25 and 31 of the method additionally aligning additionally third through holes 14 passing through the first ring element 1 in a thickness direction A of the first ring element 1 and provided in a third circular pattern 15 in the first ring element 1 with fourth through holes 16 passing through the second ring element 3 in a thickness direction B of the second ring element 3 and provided in a fourth circular pattern 17 in the second ring element 3 to provide second aligned through holes 37, and the fastening step comprises in such embodiment of the method additionally fastening the first ring element 1 to the second ring element 3 by arranging fastening bolts 12 in the second aligned through holes 37. In such embodiments of the method, the providing step can comprise providing at least some of the first through holes 7 of the first ring element 1 with a first slot 13 extending from a first through hole 7 in a thickness direction A of the first ring element 1 from the first abutment ring surface 5 of the first ring element 1 in the radial direction R of the first ring element 1 to a third through hole 14 passing through the first ring element 1 in the thickness direction A of the first ring element 1 and provided in the third circular pattern 15 in the first ring element 1, as illustrated in figures 3 to 5, 10, 11, 14, 15, and 34 to 37. In such embodiments of the method, the providing step can alternatively or additionally comprise additionally providing at least some of the third through holes 14 of the first ring element 1 with a second slot 18 extending from the third through hole 14 in a thickness direction A of the first ring element 1 from the first abutment ring surface 5 of the first ring element 1 in a radial direction R of the first ring element 1 as illustrated in figures 6 to 9, 12, 13, 27 to 30 and 33 . The second slots 18 will locally reduce the stiffness and alter the stress flow resistance around the first through holes 7. This will reduce the peak stress and increase fatigue stress. At least some of the possible second slots 18 provided in the providing step can extend in two directions from the third through hole 14 as illustrated in figures 12, 13, and 30. At least some of the possible second slots 18 provided in the providing step can be provided as through slots extending through the entire first ring element 1 in the thickness direction A of the first ring element 1 as illustrated in figures 6, 7, 32 and 33. At least some of the possible second slots 18 provided in the providing step can be provided as blind slots recessed into the first ring element 1 in the thickness direction A of the first ring element 1 as illustrated in figures 8, 9, 12, 13, and 27 to 30. At least some of the second slots 18 provided in the providing step can be provided with at least one second through slot section (not shown in the figures) extending through the entire first ring element 1 in the thickness direction A of the first ring element 1 and with at least one second blind slot section (not shown in the figures) recessed into the first ring element 1 in the thickness direction A of the first ring element 1.

At least some of the possible second slots 18 can be provided to have a uniform depth throughout the second slot 18 or at a part of the second slot 18.

At least some of the possible second slots 18 can be provided to have a varying depth throughout the second slot 18 or at a part of the second slot 18.

At least some of the possible second slots 18 can be provided to have a uniform width throughout the second slot 18 or at a part of the second slot 18.

At least some of the possible second slots 18 can be provided to have a varying width throughout the second slot 18 or at a part of the second slot 18.

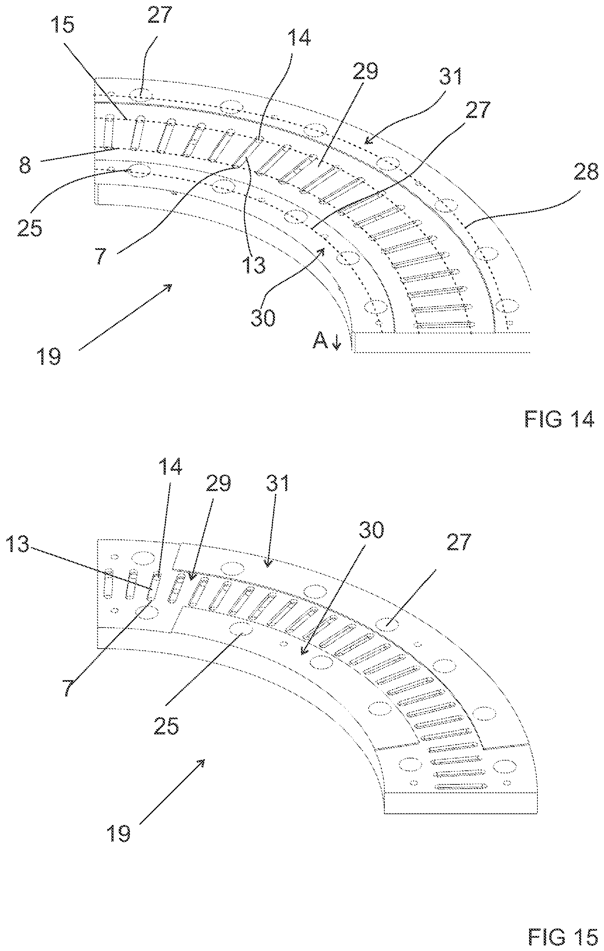

The method can include a forming step for forming the first ring element 1 of several arch sections 19 together forming the first ring element 1, as illustrated in figures 14 and 15.

The method can in some embodiments of the method, such as in the first embodiment illustrated in figures 1 to 3, include providing the first ring element 1 of the first tower element 2 in the form of an adapter ring of a foundation 20 of the tower construction, wherein the first ring element 1 of the first tower element 2 is configured to be anchored by means of anchoring bolts 21 to concrete 22 of the foundation 20 of the tower construction, and include providing the second ring element 3 of the second tower element 4 in the form of a second flange 23 provided at a second end 24 of the second tower element 4 that is in the form of a tubular tower 35 of the tower construction. Such embodiments of the method can include providing the first ring element 1 with fifth through holes 25 configured to receive anchoring bolts 21 so that the fifth through holes 25 passing through the first ring element 1 in the thickness direction A of the first ring element 1 in a fifth circular pattern 26, and include providing the first ring element 1 with sixth through holes 27 configured to receive anchoring bolts 21 so that the sixth through holes 27 extend through the first ring element 1 in the thickness direction A of the first ring element 1 in a sixth circular pattern 28. Such embodiments of the method can include providing the first abutment ring surface 5 of the first ring element 1 with a circular slot 29, that is at least partly radially inwardly limited by an inner abutment surface section 30 of the first abutment ring surface 5 of the first ring element 1 and that is at least partly radially outwardly limited by an outer abutment surface section 31 of the first abutment ring surface 5 of the first ring element 1, so that the first through holes 7 and the second through holes 9 extend from the circular slot 29 of the first abutment ring surface 5 of the first ring element 1. If the method includes providing the first ring element 1 with fifth through holes 25, with sixth through holes 27, and with a circular slot 29 as presented, the method can include providing the fifth through holes 25 in the first ring element 1 to extend from the inner abutment surface section 30 of the first abutment ring surface 5 of the first ring element 1, and providing the sixth through holes 27 in the first ring element 1 to extend from the outer abutment surface section 31 of the of the first ring element 1.

The method can in some embodiments of the method include providing the first ring element 1 of the first tower element 2 in the form of a first flange 32 provided at a first end 33 of the first tower element 2 that is in the form of a tubular section element 36 of a tubular tower 35 of the tower construction, and include providing the second ring element 3 of the second tower element 4 in the form of a second flange 23 provided at a second end 24 of the second tower element 4 that is in the form of an adjacent tubular section element 36 of a tubular tower 35 of the tower construction, as illustrated for example in figures 16, 25, and 31.

The method can in some embodiments of the method include providing the first ring element 1 of the first tower element 2 in the form of first flange 32 provided at a first end 33 of the first tower element 2 that is in the form of a tubular tower 35 of a tower construction that is the form of a wind turbine. Such embodiments of the method can include providing the second ring element 3 of the second tower element 4 in the form of a second flange 23 provided at a second tower element 4 that is in the form of a nacelle 34 of the tower construction in the form of a wind turbine.

Next the arrangement for connecting a first ring element 1 of a first tower element 2 and a second ring element 3 of a second tower element 4 in a tower construction such as a wind generator and some variants and embodiments of the arrangement will be described in greater detail. The first ring element 1 and the second ring element 3 are preferably, but not necessarily, made of metal.

First tower element 2 can in this context for example be an adapter ring of a foundation 20 of the tower construction and second tower element 4 can in this context be a tubular tower 35 of the tower construction, as illustrated in figures 1 to 3 and 38, or be a lowermost tubular section element 36 of a tubular tower 35 of the tower construction, if the tower construction has a tubular tower 35 comprising several tubular section elements 36 as illustrated in figures 1 to 3 and 39.

Alternatively, first tower element 2 can in this context for example be a tubular tower 35 of the tower construction or be a lowermost tubular section element 36 of a tubular tower 35 of the tower construction, if the tower construction has a tubular tower 35 comprising several tubular section elements 36 and second tower element 4 can in this context be a part of a foundation of the tower construction.

First tower element 2 can in this context example be a tubular section element 36 of a tubular tower 35 of the tower construction and second tower element 4 can in this context be an adjacent tubular section element 36 of the tubular tower 35 of the tower construction, if the tower construction has a tubular tower 35 comprising several tubular section elements 36. Such embodiments are for example illustrated in figures 16, 25, 31 and 39.

First tower element 2 can in this context for example be the nacelle 34 of a tower construction that is in the form of a wind turbine and second tower element 4 can in this context be a tubular tower 35 of the tower construction, as illustrated in figure 38, or be an uppermost tubular section element 36 of a tubular tower 35 of the tower construction, if the tower construction that is in the form of a wind turbine has a tubular tower 35 comprising several tubular section elements 36 as illustrated in figure 39.

Alternatively, first tower element 2 can in this context be a tubular tower 35 of a tower construction that is in the form of a wind turbine or be an uppermost tubular section element 36 of a tubular tower 35 of a tower construction that is in the form of a wind turbine, if the tower construction that is in the form of a wind turbine has a tubular tower 35 comprising several tubular section elements 36 and second tower element 4 can in this context for example be the nacelle 34 of a tower construction that is in the form of a wind turbine.

In the arrangement a first abutment ring surface 5 of the first ring element 1 of the first tower element 2 is arranged against a second abutment ring surface 6 of the second ring element 3 of the second tower element 4.

In the arrangement first through holes 7 passing through the first ring element 1 in a thickness direction A of the first ring element 1 and provided in a first circular pattern 8 in the first ring element 1 are aligned with second through holes 9 passing through the second ring element 3 in a thickness direction B of the second ring element 3 and provided in a second circular pattern 10 in the second ring element 3 to provide first aligned through holes 11.

In the arrangement the first ring element 1 is fastened to the second ring element 3 by fastening bolts 12 arranged in the first aligned through holes 11.

Fastening bolts 12 means in this context for example headed bolts or double ended threaded studs. Nuts (not marked with a reference numeral) are preferably, but not necessarily, threaded onto the fastening bolts 12 as illustrated in the figures.

In the arrangement the first ring element 1 is preferably, but not necessarily, fastened to the second ring element 3 by fastening bolts 12 arranged in the first aligned through holes 11 so that the fastening bolts 13 presses the first ring element 1 against the second ring element 3.

In the arrangement at least some of the first through holes 7 of the first ring element 1 being provided with a first slot 13 extending from the first through hole 7 in the thickness direction A of the first ring element 1 from the first abutment ring surface 5 of the first ring element 1 in a radial direction R of the first ring element 1.

The first slots 13 will locally reduce the stiffness and alter the stress flow resistance around the first through holes 7. This will reduce the peak stress and increase fatigue stress.

At least some of the first slots 13 can extend in two opposite directions from the first through hole 7 as illustrated in figures 4, 5, 12, 13, 15, 21, 30, and 37

At least some of the first slots 13 can have a uniform depth throughout the first slot 13 or at a part of the first slot 13.

At least some of the first slots 13 can have a varying depth throughout the first slot 13 or at a part of the first slot 13.

At least some of the first slots 13 can have a uniform width throughout the first slot 13 or at a part of the first slot 13.

At least some of the first slots 13 can have a varying width throughout the first slot 13 or at a part of the first slot 13.

In the arrangement at least some of the first slots 13 can be through slots extending through the entire first ring element 1 in the thickness direction A of the first ring element 1 as illustrated for example in figures 6 and 7, figures 18 and 18, and figures 32 and 33.

In the arrangement at least some of the first slots 13 can be blind slots recessed into the first ring element 1 in the thickness direction A of the first ring element 1 as illustrated for example in figures 4, 5, and 8 to 13. Blind slot means that the slot is provided with a bottom and that the slot is not a through slot as is the case with blind holes.

In the arrangement at least some of the first slots 13 can have at least one first through slot section extending through the entire first ring element 1 in the thickness direction A of the first ring element 1 and at least one first blind slot section recessed into the first ring element 1 in the thickness direction A of the first ring element 1.

In some embodiments of the arrangement, such as in the embodiments illustrated in figures 1, 25, and 31 third through holes 14 can pass through the first ring element 1 in a thickness direction A of the first ring element 1 and provided in a third circular pattern 15 in the first ring element 1 and be aligned with fourth through holes 16 passing through the second ring element 3 in a thickness direction B of the second ring element 3 and provided in a fourth circular pattern 17 in the second ring element 3 to provide second aligned through holes 37, and the first ring element 1 can be additionally fastened to the second ring element 3 by fastening bolts 12 arranged in the second aligned through holes 37.

In such embodiments of the arrangement at least some of first slots 13 extending from the first through hole 7 in the thickness direction A of the first ring element 1 from the first abutment ring surface 5 of the first ring element 1 in the radial direction R of the first ring element 1 can extend to a third through hole 14, as illustrated in figure 3 to 5, 10, 11, 14, 15, and 34 to 37. In such embodiments of the arrangement at least some of the third through holes 14 of the first ring element 1 can be provided with second slots 18 extending from the third through hole 14 in a thickness direction A of the first ring element 1 from the first abutment ring surface 5 of the first ring element 1 in a radial direction R of the first ring element 1 as illustrated in figures 6 to 9, 12, 13, 27 to 30 and 33. The second slots 18 will locally reduce the stiffness and alter the stress flow resistance around the first through holes 7.

This will reduce the peak stress and increase fatigue stress. At least some of the possible second slots 18 can extend in two opposite directions from the first through hole 7 as illustrated in figures 12, 13, and 30

At least some of the possible second slots 18 can be through slots extending through the entire first ring element 1 in the thickness direction A of the first ring element 1 as illustrated in figures 6, 7, 32, and 33. At least some of the possible second slots 18 can be blind slots recessed into the first ring element 1 in the thickness direction A of the first ring element 1 as illustrated in figures 8, 9, 12, 13, 27 to 30. At least some of the possible second slots 18 can have at least one second through slot section (not illustrated in the figures) extending through the entire first ring element 1 in the thickness direction A of the first ring element 1 and at least one second blind slot section (not illustrated in the figures) recessed into the first ring element 1 in the thickness direction A of the first ring element 1.

At least some of the possible second slots 18 can have a uniform depth throughout the second slot 18 or at a part of the second slot 18.

At least some of the possible second slots 18 can have a varying depth throughout the second slot 18 or at a part of the second slot 18.

At least some of the possible second slots 18 can have a uniform width throughout the second slot 18 or at a part of the second slot 18.

At least some of the possible second slots 18 can have a varying width throughout the second slot 18 or at a part of the second slot 18.

In the arrangement, the first ring element 1 can be formed of several arch sections 19 together forming the first ring element 1 as illustrated in figures 14 and 15.

In the some embodiments of the arrangement, such as in the first embodiment illustrated in figures 1 to 3, the first ring element 1 of the first tower element 2 can be in the form of an adapter ring of a foundation 20 of the tower construction, wherein the first ring element 1 of the first tower element 2 is configured to be anchored by means of anchoring bolts 21 to concrete 22 of the foundation 20 of the tower construction, and the second ring element 3 of the second tower element 4 can be in the form of a second flange 23 provided at a second end 24 of the second tower element 4 that is in the form of a tubular tower 35 of the tower construction. In such embodiments of the arrangement, the first ring element 1 can be provided with fifth through holes 25 configured to receive anchoring bolts 21 so that the fifth through holes 25 passing through the first ring element 1 in the thickness direction A of the first ring element 1 in a fifth circular pattern 26, and the first ring element 1 can be provided with sixth through holes 27 configured to receive anchoring bolts 21 so that the sixth through holes 27 extend through the first ring element 1 in the thickness direction A of the first ring element 1 in a sixth circular pattern 28. In such embodiments of the arrangement, by the first abutment ring surface 5 of the first ring element 1 can be provided with a circular slot 29, that is at least partly radially inwardly limited by an inner abutment surface section 30 of the first abutment ring surface 5 of the first ring element 1, and that is at least partly radially outwardly limited by an outer abutment surface section 31 of the first abutment ring surface 5 of the first ring element 1, so that the first through holes 7 and the second through holes 9 extend from the circular slot 29 of the first abutment ring surface 5 of the first ring element 1. If the first ring element 1 is provided with such fifth through holes 25, with such sixth through holes 27, and with such circular slot 29, the fifth through holes 25 in the first ring element 1 can extend from the inner abutment surface section 30 of the first abutment ring surface 5 of the first ring element 1, and the sixth through holes 27 in the first ring element 1 can extend from the outer abutment surface section 31 of the first abutment ring surface 5 of the first ring element 1.

In the some embodiments of the arrangement, the first ring element 1 of the first tower element 2 is in the form of a first flange 32 provided at a first end 33 of the first tower element 2 that is in the form of a tubular section element 36 of a tubular tower 35 of the tower construction, and the second ring element 3 of the second tower element 4 is in the form of a second flange 23 provided at a second end 24 of the second tower element 4 that is in the form of an adjacent tubular section element 36 of a tubular tower 35 of the tower construction as illustrated for example in figures 16, 25 and 31.

In some embodiments of the arrangement, the first ring element 1 of the first tower element 2 can be in the form of first flange 32 provided at a first end 33 of the first tower element 2 that is the form of a tubular tower 35 of a tower construction that is in the form of a wind turbine. In such embodiments, the second ring element 3 of the second tower element 4 can be the form of a second flange 23 provided at a second tower element 4 that can be in the form of a nacelle 34 of the tower construction in the form of a wind turbine.

It is apparent to a person skilled in the art that as technology advanced, the basic idea of the invention can be implemented in various ways. The invention and its embodiments are therefore not restricted to the above examples, but they may vary within the scope of the claims.

## Claims

1. A method for connecting a first ring element (1) of a first tower element (2) and a second ring element (3) of a second tower element (4) in a tower construction such as a wind generator, which method comprises
an arranging step for arranging a first abutment ring surface (5) of the first ring element (1) of the first tower element (2) against a second abutment ring surface (6) of the second ring element (3) of the second tower element (4),
an aligning step for aligning first through holes (7) passing through the first ring element (1) in a thickness direction A of the first ring element (1) and provided in a first circular pattern (8) in the first ring element (1) with second through holes (9) passing through the second ring element (3) in a thickness direction B of the second ring element (3) and provided in a second circular pattern (10) in the second ring element (3) to provide first aligned through holes (11), and
a fastening step for fastening the first ring element (1) to the second ring element (3) by arranging fastening bolts (12) in the first aligned through holes (11),
a providing step for providing at least some of the first through holes (7) of the first ring element (1) with a first slot (13) extending from the first through hole (7) in the thickness direction A of the first ring element (1) from the first abutment ring surface (5) of the first ring element (1) in a radial direction R of the first ring element (1), and **characterized**
**by** providing at least some of the first slots in the providing step as blind slots recessed into the first ring element (1) in the thickness direction A of the first ring element (1).

2. The method according to claim 1, **characterized**
**by** providing at least some of the first slots (13) in the providing step as through slots extending through the entire first ring element (1) in the thickness direction A of the first ring element (1).

3. The method according to claim 1 or 2, **characterized**
**by** providing at least some of the first slots (13) in the providing step with at least one first through slot section extending through the entire first ring element (1) in the thickness direction A of the first ring element (1) and with at least one first blind slot section recessed into the first ring element (1) in the thickness direction A of the first ring element (1).

4. The method according to any of the claims 1 to 3, **characterized**
**by** the aligning step comprises additionally aligning additionally third through holes (14) passing through the first ring element (1) in a thickness direction A of the first ring element (1) and provided in a third circular pattern (15) in the first ring element (1) with fourth through holes (16) passing through the second ring element (3) in a thickness direction B of the second ring element (3) and provided in a fourth circular pattern (17) in the second ring element (3) to provide second aligned through holes (37), and
by the fastening step comprises additionally fastening the first ring element (1) to the second ring element (3) by arranging fastening bolts (12) in the second aligned through holes (37).

5. The method according to claim 4, **characterized**
**by** the providing step comprises providing at least some of the first through holes (7) of the first ring element (1) with first slots (13) extending in a thickness direction A of the first ring element (1) from the first abutment ring surface (5) of the first ring element (1) in the radial direction R of the first ring element (1) to a third through hole (14) passing through the first ring element (1) in the thickness direction A of the first ring element (1) and provided in the third circular pattern (15) in the first ring element (1).

6. The method according to any of the claims 1 to 5, **characterized**
**by** a forming step for forming the first ring element (1) of several arch sections (19) together forming the first ring element (1).

7. The method according to any of the claims 1 to 6, **characterized**
**by** the method includes providing the first ring element (1) of the first tower element (2) in the form of an adapter ring of a foundation of the tower construction, wherein the first ring element (1) of the first tower element (2) is configured to be anchored by means of anchoring bolts (21) to concrete (22) of the foundation (20) of the tower construction, and
by the method includes providing the second ring element (3) of the second tower element (4) in the form of a second flange (23) provided at a second end (24) of the second tower element (4) that is in the form of a tubular tower (35) of the tower construction.

8. The method according to any of the claims 1 to 7, **characterized**
**by** the method includes providing the first ring element (1) of the first tower element (2) in the form of a first flange (32) provided at a first end (33) of the first tower element (2) that is in the form of a tubular section element (36) of a tubular tower (35) of the tower construction, and
by the method includes providing the second ring element (3) of the second tower element (4) in the form of a second flange (23) provided at a second end (24) of the second tower element (4) that is in the form of an adjacent tubular section element (36) of the tubular tower (35) of the tower construction.

9. The method according to any of the claims 1 to 8, **characterized**
**by** the method includes providing the first ring element (1) of the first tower element (2) in the form of first flange (32) provided at a first end (33) of the first tower element (2), wherein the first tower element (2) is in the form of a tubular tower (35) of a tower construction that is in the form of a wind turbine, and
by the method includes providing the second ring element (3) of the second tower element (4) in the form of a second flange (23) provided at a second tower element (4), wherein the second tower element (4) is in the form of a nacelle (34) of the tower construction in the form of a wind turbine.

10. An arrangement comprising a first ring element (1) of a first tower element (2) and a second ring element (3) of a second tower element (4) in a tower construction such as a wind generator, in which arrangement
a first abutment ring surface (5) of the first ring element (1) of the first tower element (2) is arranged against a second abutment ring surface (6) of the second ring element (3) of the second tower element (4),
first through holes (7) passing through the first ring element (1) in a thickness direction A of the first ring element (1) and provided in a first circular pattern (8) in the first ring element (1) are aligned with second through holes (9) passing through the second ring element (3) in a thickness direction B of the second ring element (3) and provided in a second circular pattern (10) in the second ring element (3) to provide first aligned through holes (11), and
the first ring element (1) is fastened to the second ring element (3) by fastening bolts (12) arranged in the first aligned through holes (11),
at least some of the first through holes (7) of the first ring element (1) being provided with a first slot (13) extending from the first through hole (7) in the thickness direction A of the first ring element (1) from the first abutment ring surface (5) of the first ring element (1) in a radial direction R of the first ring element (1), and **characterized**
**by** at least some of the first slots (13) being blind slots recessed into the first ring element (1) in the thickness direction A of the first ring element (1).

11. The arrangement according to claim 10, **characterized**
**by** at least some of the first slots (13) being through slots extending through the entire first ring element (1) in the thickness direction A of the first ring element (1).

12. The arrangement according to claim 10 or 11, **characterized**
**by** at least some of the first slots (13) having at least one first through slot section extending through the entire first ring element (1) in the thickness direction A of the first ring element (1) and at least one first blind slot section recessed into the first ring element (1) in the thickness direction A of the first ring element (1).

13. The arrangement according to any of the claims 10 to 12, **characterized**
**by** third through holes (14) passing through the first ring element (1) in a thickness direction A of the first ring element (1) and provided in a third circular pattern (15) in the first ring element (1) being additionally aligned with fourth through holes (16) passing through the second ring element (3) in a thickness direction B of the second ring element (3) and provided in a fourth circular pattern (17) in the second ring element (3) to provide second aligned through holes (37), and
by the first ring element (1) being additionally fastened to the second ring element (3) by fastening bolts (12) arranged in the second aligned through holes (37).

14. The arrangement according to any of the claims 10 to 13, **characterized**
**by** the first ring element (1) being formed of several arch sections (19) together forming the first ring element (1).

15. The arrangement according to any of the claims 10 to 14, **characterized**
**by** the first ring element (1) of the first tower element (2) being in the form of an adapter ring of a foundation (20) of the tower construction, wherein the first ring element (1) of the first tower element (2) is configured to be anchored by means of anchoring bolts (21) to concrete (22) of the foundation (20) of the tower construction, and
by the second ring element (3) of the second tower element (4) being in the form of a second flange (23) provided at a second end (24) of the second tower element (4) that is in the form of a tubular tower (35) of the tower construction.

16. The arrangement according to any of the claims 10 to 15, **characterized**
**by** the first ring element (1) of the first tower element (2) being in the form of a first flange (32) provided at a first end (33) of the first tower element (2) that is in the form of a tubular section element (36) of a tubular tower (35) of the tower construction, and
by the second ring element (3) of the second tower element (4) being in the form of a second flange (23) provided at a second end (24) of the second tower element (4) that is in the form of an adjacent tubular section element (36) of the tubular tower (35) of the tower construction.

17. The arrangement according to any of the claims 10 to 16, **characterized**
**by** the first ring element (1) of the first tower element (2) being in the form of first flange (32) provided at a first end (33) of the first tower element (2), wherein the first tower element (2) is in the form of a tubular tower (35) of a tower construction that is in the form of a wind turbine, and
by the second ring element (3) of the second tower element (4) being in the form of a second flange (23) provided at a second tower element (4), wherein the second tower element (4) is in the form of a nacelle (34) of the tower construction that is in the form of a wind turbine.

## Patentansprüche

1. Verfahren zum Verbinden eines ersten Ringelements (1) eines ersten Turmelements (2) und eines zweiten Ringelements (3) eines zweiten Turmelements (4) in einer Turmkonstruktion wie einer Windenergieanlage, wobei das Verfahren umfasst:
einen Anordnungsschritt zum Anordnen einer ersten Ringanschlagfläche (5) des ersten Ringelements (1) des ersten Turmelements (2) an einer zweiten Ringanschlagfläche (6) des zweiten Ringelements (3) des zweiten Turmelements (4),
einen Fluchtungsschritt zum Fluchten von ersten Durchgangslöchern (7), die das erste Ringelement (1) in einer Dickenrichtung A des ersten Ringelements (1) durchziehen und in einem ersten kreisförmigen Muster (8) im ersten Ringelement (1) vorgesehen sind, mit zweiten Durchgangslöchern (9), die das zweite Ringelement (3) in einer Dickenrichtung B des zweiten Ringelements (3) durchziehen und in einem zweiten kreisförmigen Muster (10) im zweiten Ringelement (3) vorgesehen sind, um erste gefluchtete Durchgangslöcher (11) bereitzustellen, und
einen Befestigungsschritt zum Befestigen des ersten Ringelements (1) am zweiten Ringelement (3) durch das Anordnen von Befestigungsbolzen (12) in den ersten gefluchteten Durchgangslöchern (11),
einen Bereitstellungsschritt, um mindestens einige der ersten Durchgangslöcher (7) des ersten Ringelements (1) mit einem ersten Schlitz (13) zu versehen, der sich ausgehend vom ersten Durchgangsloch (7) in der Dickenrichtung A des ersten Ringelements (1) von der ersten Ringanschlagfläche (5) des ersten Ringelements (1) in einer radialen Richtung R des ersten Ringelements (1) erstreckt, und **gekennzeichnet dadurch, dass**
mindestens einige der ersten Schlitze im Bereitstellungsschritt als Blindschlitze bereitgestellt werden, die in das erste Ringelement (1) in der Dickenrichtung A des ersten Ringelements (1) eingelassen sind.

2. Verfahren nach Anspruch 1, **gekennzeichnet durch**
Bereitstellen von mindestens einigen der ersten Schlitze (13) im Bereitstellungsschritt als Durchgangsschlitze, die sich **durch** das gesamte erste Ringelement (1) in der Dickenrichtung A des ersten Ringelements (1) erstrecken.

3. Verfahren nach Anspruch 1 oder 2, **gekennzeichnet durch**
Bereitstellen von mindestens einigen der ersten Schlitze (13) im Bereitstellungsschritt dergestalt, dass sich mindestens ein erster Durchgangsschlitzabschnitt **durch** das gesamte erste Ringelement (1) in der Dickenrichtung A des ersten Ringelements (1) erstreckt und mindestens ein erster Blindschlitzabschnitt in das erste Ringelement (1) in der Dickenrichtung A des ersten Ringelements (1) eingelassen ist.

4. Verfahren nach einem der Ansprüche 1 bis 3, **gekennzeichnet dadurch, dass**
der Fluchtungsschritt außerdem umfasst: zusätzliches Fluchten von dritten Durchgangslöchern (14), die das erste Ringelement (1) in einer Dickenrichtung A des ersten Ringelements (1) durchziehen und in einem dritten kreisförmigen Muster (15) im ersten Ringelement (1) vorgesehen sind, mit vierten Durchgangslöchern (16), die das zweite Ringelement (3) in einer Dickenrichtung B des zweiten Ringelements (3) durchziehen und in einem vierten kreisförmigen Muster (17) im zweiten Ringelement (3) vorgesehen sind, um zweite gefluchtete Durchgangslöcher (37) bereitzustellen, und
der Befestigungsschritt umfasst: zusätzliches Befestigen des ersten Ringelements (1) am zweiten Ringelement (3) durch das Anordnen von Befestigungsbolzen (12) in den zweiten gefluchteten Durchgangslöchern (37).

5. Verfahren nach Anspruch 4, **gekennzeichnet dadurch, dass**
der Bereitstellungsschritt umfasst: Versehen von mindestens einigen der ersten Durchgangslöcher (7) des ersten Ringelements (1) mit ersten Schlitzen (13), die sich in einer Dickenrichtung A des ersten Ringelements (1) von der ersten Ringanschlagfläche (5) des ersten Ringelements (1) in der radialen Richtung R des ersten Ringelements (1) bis zu einem dritten Durchgangsloch (14) erstrecken, das das erste Ringelement (1) in der Dickenrichtung A des ersten Ringelements (1) durchzieht und im dritten kreisförmigen Muster (15) im ersten Ringelement (1) vorgesehen ist.

6. Verfahren nach einem der Ansprüche 1 bis 5, **gekennzeichnet durch**
einen Ausbildungsschritt zum Ausbilden des ersten Ringelements (1) aus mehreren Bogenabschnitten (19), die zusammen das erste Ringelement (1) bilden.

7. Verfahren nach einem der Ansprüche 1 bis 6, **gekennzeichnet dadurch, dass**
das Verfahren umfasst: Bereitstellen des ersten Ringelements (1) des ersten Turmelements (2) in Form eines Adapterrings eines Fundaments der Turmkonstruktion, wobei das erste Ringelement (1) des ersten Turmelements (2) so ausgelegt ist, dass es mittels Ankerschrauben (21) im Beton (22) des Fundaments (20) der Turmkonstruktion verankert wird, und
das Verfahren umfasst: Bereitstellen des zweiten Ringelements (3) des zweiten Turmelements (4) in Form eines zweiten Flansches (23), der an einem zweiten Ende (24) des zweiten Turmelements (4), das in der Form eines röhrenförmigen Turms (35) der Turmkonstruktion vorliegt, vorgesehen ist.

8. Verfahren nach einem der Ansprüche 1 bis 7, **gekennzeichnet dadurch, dass**
das Verfahren umfasst: Bereitstellen des ersten Ringelements (1) des ersten Turmelements (2) in Form eines ersten Flansches (32), der an einem ersten Ende (33) des ersten Turmelements (2), das in Form eines Röhrenprofilelements (36) eines röhrenförmigen Turms (35) der Turmkonstruktion vorliegt, vorgesehen ist, und
das Verfahren umfasst: Bereitstellen des zweiten Ringelements (3) des zweiten Turmelements (4) in Form eines zweiten Flansches (23), der an einem zweiten Ende (24) des zweiten Turmelements (4), das in Form eines angrenzenden Röhrenprofilelements (36) des röhrenförmigen Turms (35) der Turmkonstruktion vorliegt, vorgesehen ist.

9. Verfahren nach einem der Ansprüche 1 bis 8, **gekennzeichnet dadurch, dass**
das Verfahren umfasst: Bereitstellen des ersten Ringelements (1) des ersten Turmelements (2) in Form eines an einem ersten Ende (33) des ersten Turmelements (2) vorgesehenen ersten Flansches (32), wobei das erste Turmelement (2) in Form eines röhrenförmigen Turms (35) einer in Form einer Windkraftanlage vorliegenden Turmkonstruktion vorliegt, und
das Verfahren umfasst: Bereitstellen des zweiten Ringelements (3) des zweiten Turmelements (4) in Form eines an einem zweiten Turmelement (4) vorgesehenen zweiten Flansches (23) bereitgestellt wird, wobei das zweite Turmelement (4) in Form einer Gondel (34) der in Form einer Windkraftanlage vorliegenden Turmkonstruktion vorliegt.

10. Anordnung umfassend ein erstes Ringelement (1) eines ersten Turmelements (2) und ein zweites Ringelement (3) eines zweiten Turmelements (4) in einer Turmkonstruktion wie einer Windenergieanlage, wobei in dieser Anordnung
eine erste Ringanschlagfläche (5) des ersten Ringelements (1) des ersten Turmelements (2) an einer zweiten Ringanschlagfläche (6) des zweiten Ringelements (3) des zweiten Turmelements (4) angeordnet ist,
erste Durchgangslöcher (7), die das erste Ringelement (1) in einer Dickenrichtung A des ersten Ringelements (1) durchziehen und in einem ersten kreisförmigen Muster (8) im ersten Ringelement (1) vorgesehen sind, mit zweiten Durchgangslöchern (9), die das zweite Ringelement (3) in einer Dickenrichtung B des zweiten Ringelements (3) durchziehen und in einem zweiten kreisförmigen Muster (10) im zweiten Ringelement (3) vorgesehen sind, gefluchtet sind, um erste gefluchtete Durchgangslöcher (11) bereitzustellen, und
das erste Ringelement (1) durch in den ersten gefluchteten Durchgangslöchern (11) angeordnete Befestigungsbolzen (12) am zweiten Ringelement (3) befestigt ist,
wobei mindestens einige der ersten Durchgangslöcher (7) des ersten Ringelements (1) mit einem ersten Schlitz (13) versehen sind, der sich ausgehend vom ersten Durchgangsloch (7) in der Dickenrichtung A des ersten Ringelements (1) von der ersten Ringanschlagfläche (5) des ersten Ringelements (1) in einer radialen Richtung R des ersten Ringelements (1) erstreckt, und **gekennzeichnet dadurch, dass**
mindestens einige der ersten Schlitze (13) Blindschlitze sind, die in das erste Ringelement (1) in der Dickenrichtung A des ersten Ringelements (1) eingelassen sind.

11. Anordnung nach Anspruch 10, **gekennzeichnet dadurch, dass**
mindestens einige der ersten Schlitze (13) Durchgangsschlitze sind, die sich durch das gesamte erste Ringelement (1) in der Dickenrichtung A des ersten Ringelements (1) erstrecken.

12. Anordnung nach Anspruch 10 oder 11, **gekennzeichnet dadurch, dass**
mindestens einige der ersten Schlitze (13) mindestens einen ersten Durchgangsschlitzabschnitt, der sich durch das gesamte erste Ringelement (1) in der Dickenrichtung A des ersten Ringelements (1) erstreckt, und mindestens einen ersten Blindschlitzabschnitt, der in das erste Ringelement (1) in der Dickenrichtung A des ersten Ringelements (1) eingelassen ist, aufweisen.

13. Anordnung nach einem der Ansprüche 10 bis 12, **gekennzeichnet dadurch, dass**
dritte Durchgangslöcher (14), die das erste Ringelement (1) in einer Dickenrichtung A des ersten Ringelements (1) durchziehen und in einem dritten kreisförmigen Muster (15) im ersten Ringelement (1) vorgesehen sind, zusätzlich mit vierten Durchgangslöchern (16), die das zweite Ringelement (3) in einer Dickenrichtung B des zweiten Ringelements (3) durchziehen und in einem vierten kreisförmigen Muster (17) im zweiten Ringelement (3) vorgesehen sind, gefluchtet sind, um zweite gefluchtete Durchgangslöcher (37) bereitzustellen, und
das erste Ringelement (1) durch Befestigungsbolzen (12), die in den zweiten gefluchteten Durchgangslöchern (37) angeordnet sind, zusätzlich am zweiten Ringelement (3) befestigt ist.

14. Anordnung nach einem der Ansprüche 10 bis 13, **gekennzeichnet dadurch, dass**
das erste Ringelement (1) aus mehreren Bogenabschnitten (19) ausgebildet ist, die zusammen das erste Ringelement (1) bilden.

15. Anordnung nach einem der Ansprüche 10 bis 14, **gekennzeichnet dadurch, dass**
das erste Ringelement (1) des ersten Turmelements (2) in Form eines Adapterrings eines Fundaments (20) der Turmkonstruktion vorliegt, wobei das erste Ringelement (1) des ersten Turmelements (2) so ausgelegt ist, dass es mittels Ankerschrauben (21) im Beton (22) des Fundaments (20) der Turmkonstruktion verankert ist, und
das zweite Ringelement (3) des zweiten Turmelements (4) in Form eines zweiten Flansches (23) vorliegt, der an einem zweiten Ende (24) des zweiten Turmelements (4), das in Form eines röhrenförmigen Turms (35) der Turmkonstruktion vorliegt, vorgesehen ist.

16. Anordnung nach einem der Ansprüche 10 bis 15, **gekennzeichnet dadurch, dass**
das erste Ringelement (1) des ersten Turmelements (2) in Form eines ersten Flansches (32) vorliegt, der an einem ersten Ende (33) des ersten Turmelements (2), das in Form eines Röhrenprofilelements (36) eines röhrenförmigen Turms (35) der Turmkonstruktion vorliegt, vorgesehen ist, und
das zweite Ringelement (3) des zweiten Turmelements (4) in Form eines zweiten Flansches (23) vorliegt, der an einem zweiten Ende (24) des zweiten Turmelements (4), das in Form eines angrenzenden Röhrenprofilelements (36) des röhrenförmigen Turms (35) der Turmkonstruktion vorliegt, vorgesehen ist.

17. Anordnung nach einem der Ansprüche 10 bis 16, **gekennzeichnet dadurch, dass**
das erste Ringelement (1) des ersten Turmelements (2) in Form eines an einem ersten Ende (33) des ersten Turmelements (2) vorgesehenen ersten Flansches (32) vorliegt, wobei das erste Turmelement (2) in Form eines röhrenförmigen Turms (35) einer in Form einer Windkraftanlage vorliegenden Turmkonstruktion vorliegt, und
das zweite Ringelement (3) des zweiten Turmelements (4) in Form eines an einem zweiten Turmelement (4) vorgesehenen zweiten Flansches (23) vorliegt, wobei das zweite Turmelement (4) in Form einer Gondel (34) der in Form einer Windkraftanlage vorliegenden Turmkonstruktion vorliegt.

## Revendications

1. Procédé pour relier un premier élément annulaire (1) d'un premier élément de tour (2) et d'un deuxième élément annulaire (3) d'un deuxième élément de tour (4) dans une structure de tour telle qu'une génératrice éolienne, ledit procédé comprenant :
une étape d'agencement pour agencer une première surface de butée annulaire (5) du premier élément annulaire (1) du premier élément de tour (2) contre une deuxième surface de butée annulaire (6) du deuxième élément annulaire (3) du deuxième élément de tour (4),
une étape d'alignement pour aligner de premiers trous de passage (7) traversant le premier élément annulaire (1) dans une direction d'épaisseur A du premier élément annulaire (1) et étant prévus selon un premier schéma circulaire (8) dans le premier élément annulaire (1) sur de deuxièmes trous de passage (9) traversant le deuxième élément annulaire (3) dans une direction d'épaisseur B du deuxième élément annulaire (3) et étant prévus selon un deuxième schéma circulaire (10) dans le deuxième élément annulaire (3) pour fournir de premiers trous de passage alignés (11), et
une étape de fixation pour fixer le premier élément annulaire (1) au deuxième élément annulaire (3) en disposant des boulons de fixation (12) dans les premiers trous de passage alignés (11),
une étape de fourniture pour fournir au moins quelques-uns des premiers trous de passage (7) du premier élément annulaire (1) d'une première fente (13) s'étendant à partir du premier trou de passage (7) dans la direction d'épaisseur A du premier élément annulaire (1) depuis la première surface de butée annulaire (5) du premier élément annulaire (1) dans une direction radiale R du premier élément annulaire (1), et **caractérisé par** l'étape consistant à
fournir au moins quelques-unes des premières fentes dans l'étape de fourniture comme fentes borgnes creusées dans le premier élément annulaire (1) dans la direction d'épaisseur A du premier élément annulaire (1).

2. Procédé selon la revendication 1, **caractérisé par** l'étape consistant à
fournir au moins quelques-unes des premières fentes (13) dans l'étape de fourniture comme fentes de passage s'étendant à travers le premier élément annulaire entier (1) dans la direction d'épaisseur A du premier élément annulaire (1).

3. Procédé selon la revendication 1 ou 2, **caractérisé par** l'étape consistant à
fournir au moins quelques-unes des premières fentes (13) dans l'étape de fourniture d'au moins un premier segment de fente de passage s'étendant à travers le premier élément annulaire entier (1) dans la direction d'épaisseur A du premier élément annulaire (1) et d'au moins un premier segment de fente borgne creusé dans le premier élément annulaire (1) dans la direction d'épaisseur A du premier élément annulaire (1).

4. Procédé selon l'une des revendications 1 à 3, **caractérisé en ce que**
l'étape d'alignement comprend en outre l'étape consistant à aligner en outre de troisièmes trous de passage (14) traversant le premier élément annulaire (1) dans une direction d'épaisseur A du premier élément annulaire (1) et étant prévus selon un troisième schéma circulaire (15) dans le premier élément annulaire (1) sur de quatrièmes trous de passage (16) traversant le deuxième élément annulaire (3) dans une direction d'épaisseur B du deuxième élément annulaire (3) et étant prévus selon un quatrième schéma circulaire (17) dans le deuxième élément annulaire (3) pour fournir de deuxièmes trous de passage alignés (37), et
l'étape de fixation comprend en outre l'étape consistant à fixer le premier élément annulaire (1) au deuxième élément annulaire (3) en disposant des boulons de fixation (12) dans les deuxièmes trous de passage alignés (37).

5. Procédé selon la revendication 4, **caractérisé en ce que**
l'étape de fourniture comprend l'étape consistant à fournir au moins quelques-uns des premiers trous de passage (7) du premier élément annulaire (1) de premières fentes (13) s'étendant dans une direction d'épaisseur A du premier élément annulaire (1) à partir de la première surface de butée annulaire (5) du premier élément annulaire (1) dans la direction radiale R du premier élément annulaire (1) jusqu'à un troisième trou de passage (14) traversant le premier élément annulaire (1) dans la direction d'épaisseur A du premier élément annulaire (1) et étant prévu selon le troisième schéma circulaire (15) dans le premier élément annulaire (1).

6. Procédé selon l'une des revendications 1 à 5, **caractérisé par**
une étape de formation pour former le premier élément annulaire (1) de plusieurs sections d'arc (19) formant ensemble le premier élément annulaire (1).

7. Procédé selon l'une des revendications 1 à 6, **caractérisé en ce que**
le procédé comprend l'étape consistant à fournir le premier élément annulaire (1) du premier élément de tour (2) sous la forme d'un anneau adaptateur d'une fondation de la structure de tour, ledit premier élément annulaire (1) du premier élément de tour (2) étant configuré pour être ancré dans le béton (22) de la fondation (20) de la structure de tour au moyen de boulons d'ancrage (21), et
le procédé comprend l'étape consistant à fournir le deuxième élément annulaire (3) du deuxième élément de tour (4) sous la forme d'une deuxième bride (23) prévue à une deuxième extrémité (24) du deuxième élément de tour (4) qui est en forme d'une tour tubulaire (35) de la structure de tour.

8. Procédé selon l'une des revendications 1 à 7, **caractérisé en ce que**
le procédé comprend l'étape consistant à fournir le premier élément annulaire (1) du premier élément de tour (2) sous la forme d'une première bride (32) prévue à une première extrémité (33) du premier élément de tour (2) qui est en forme d'un élément de section tubulaire (36) d'une tour tubulaire (35) de la structure de tour, et
le procédé comprend l'étape consistant à fournir le deuxième élément annulaire (3) du deuxième élément de tour (4) sous la forme d'une deuxième bride (23) prévue à une deuxième extrémité (24) du deuxième élément de tour (4) qui est en forme d'un élément de section tubulaire adjacent (36) de la tour tubulaire (35) de la structure de tour.

9. Procédé selon l'une des revendications 1 à 8, **caractérisé en ce que**
le procédé comprend l'étape consistant à fournir le premier élément annulaire (1) du premier élément de tour (2) sous la forme d'une première bride (32) prévue à une première extrémité (33) du premier élément de tour (2), ledit premier élément de tour (2) étant en forme d'une tour tubulaire (35) d'une structure de tour qui est en forme d'une éolienne, et
le procédé comprend l'étape consistant à fournir le deuxième élément annulaire (3) du deuxième élément de tour (4) sous la forme d'une deuxième bride (23) prévue à un deuxième élément de tour (4), ledit deuxième élément de tour (4) étant en forme d'une nacelle (34) de la structure de tour en forme d'éolienne.

10. Agencement comprenant un premier élément annulaire (1) d'un premier élément de tour (2) et un deuxième élément annulaire (3) d'un deuxième élément de tour (4) dans une structure de tour telle qu'une génératrice éolienne, dans ledit agencement
une première surface de butée annulaire (5) du premier élément annulaire (1) du premier élément de tour (2) est agencée contre une deuxième surface de butée annulaire (6) du deuxième élément annulaire (3) du deuxième élément de tour (4),
de premiers trous de passage (7) traversant le premier élément annulaire (1) dans une direction d'épaisseur A du premier élément annulaire (1) et étant prévus selon un premier schéma circulaire (8) dans le premier élément annulaire (1) sont alignés sur de deuxièmes trous de passage (9) traversant le deuxième élément annulaire (3) dans une direction d'épaisseur B du deuxième élément annulaire (3) et étant prévus selon un deuxième schéma circulaire (10) dans le deuxième élément annulaire (3) pour fournir de premiers trous de passage alignés (11), et
le premier élément annulaire (1) est fixé au deuxième élément annulaire (3) par des boulons de fixation (12) disposés dans les premiers trous de passage alignés (11),
au moins quelques-uns des premiers trous de passage (7) du premier élément annulaire (1) sont pourvus d'une première fente (13) s'étendant à partir du premier trou de passage (7) dans la direction d'épaisseur A du premier élément annulaire (1) depuis la première surface de butée annulaire (5) du premier élément annulaire (1) dans une direction radiale R du premier élément annulaire (1), et **caractérisé en ce que**
au moins quelques-unes des premières fentes (13) sont des fentes borgnes creusées dans le premier élément annulaire (1) dans la direction d'épaisseur A du premier élément annulaire (1).

11. Agencement selon la revendication 10, **caractérisé en ce que**
au moins quelques-unes des premières fentes (13) sont des fentes de passage s'étendant à travers le premier élément annulaire entier (1) dans la direction d'épaisseur A du premier élément annulaire (1).

12. Agencement selon la revendication 10 ou 11, **caractérisé en ce que**
au moins quelques-unes des premières fentes (13) comportent au moins un premier segment de fente de passage s'étendant à travers le premier élément annulaire entier (1) dans la direction d'épaisseur A du premier élément annulaire (1) et au moins un premier segment de fente borgne creusé dans le premier élément annulaire (1) dans la direction d'épaisseur A du premier élément annulaire (1).

13. Agencement selon l'une des revendications 10 à 12, **caractérisé en ce que**
de troisièmes trous de passage (14) traversant le premier élément annulaire (1) dans une direction d'épaisseur A du premier élément annulaire (1) et étant prévus selon un troisième schéma circulaire (15) dans le premier élément annulaire (1) sont en outre alignés sur de quatrièmes trous de passage (16) traversant le deuxième élément annulaire (3) dans une direction d'épaisseur B du deuxième élément annulaire (3) et étant prévus selon un quatrième schéma circulaire (17) dans le deuxième élément annulaire (3) pour fournir de deuxièmes trous de passage alignés (37), et
le premier élément annulaire (1) est en outre fixé au deuxième élément annulaire (3) par des boulons de fixation (12) disposés dans les deuxièmes trous de passage alignés (37).

14. Agencement selon l'une des revendications 10 à 13, **caractérisé en ce que**
le premier élément annulaire (1) est formé de plusieurs sections d'arc (19) formant ensemble le premier élément annulaire (1).

15. Agencement selon l'une des revendications 10 à 14, **caractérisé en ce que**
le premier élément annulaire (1) du premier élément de tour (2) est en forme d'un anneau adaptateur d'une fondation (20) de la structure de tour, ledit premier élément annulaire (1) du premier élément de tour (2) étant configuré pour être ancré dans le béton (22) de la fondation (20) de la structure de tour au moyen de boulons d'ancrage (21), et
le deuxième élément annulaire (3) du deuxième élément de tour (4) est en forme d'une deuxième bride (23) prévue à une deuxième extrémité (24) du deuxième élément de tour (4) qui est en forme d'une tour tubulaire (35) de la structure de tour.

16. Agencement selon l'une des revendications 10 à 15, **caractérisé en ce que**
le premier élément annulaire (1) du premier élément de tour (2) est en forme d'une première bride (32) prévue à une première extrémité (33) du premier élément de tour (2) qui est en forme d'un élément de section tubulaire (36) d'une tour tubulaire (35) de la structure de tour, et
le deuxième élément annulaire (3) du deuxième élément de tour (4) est en forme d'une deuxième bride (23) prévue à une deuxième extrémité (24) du deuxième élément de tour (4) qui est en forme d'un élément de section tubulaire adjacent (36) de la tour tubulaire (35) de la structure de tour.

17. Agencement selon l'une des revendications 10 à 16, **caractérisé en ce que**
le premier élément annulaire (1) du premier élément de tour (2) est en forme d'une première bride (32) prévue à une première extrémité (33) du premier élément de tour (2), ledit premier élément de tour (2) étant en forme d'une tour tubulaire (35) d'une structure de tour qui est en forme d'une éolienne, et
le deuxième élément annulaire (3) du deuxième élément de tour (4) est en forme d'une deuxième bride (23) prévue à un deuxième élément de tour (4), ledit deuxième élément de tour (4) étant en forme d'une nacelle (34) de la structure de tour qui est en forme d'une éolienne.
